# EUROPÄISCHE PATENTANMELDUNG

(11) **EP 4 649 803 A1**
(43) Veröffentlichungstag der Anmeldung: **19.11.2025**
(21) Anmeldenummer: 25165929.8
(22) Anmeldetag: 25.03.2025
(51) Int. Cl.: A01C 7/04, A01C 7/08, A01C 7/10

(54) **VERTEILSYSTEM FÜR EINE LANDWIRTSCHAFTLICHE AUSBRINGMASCHINE, LANDWIRTSCHAFTLICHE AUSBRINGMASCHINE UND VERFAHREN ZUM VERTEILEN VON AUSBRINGMATERIAL**

(30) Priorität: 15.05.2024 DE 102024113608
(71) Anmelder: Amazonen-Werke H. Dreyer SE & Co. KG, 49205 Hasbergen (DE)
(72) Erfinder: Bührke, Johannes, 49205 Hasbergen (DE); Teckemeyer, Stephan, 49205 Hasbergen (DE)

(57) **Zusammenfassung**

Die Erfindung betrifft ein Materialverteilsystem (10) für eine landwirtschaftliche Ausbringmaschine, mit einer Materialeinspeisevorrichtung (20), welche dazu eingerichtet ist, von einem Einspeisedosierer (16) vordosiertes Ausbringmaterial (M) aufzunehmen und temporär als Einspeisevorrat (EV) zu bevorraten, um auf Grundlage des Einspeisevorrats (EV) und einer in die Materialeinspeisevorrichtung (20) eingeleiteten Luftströmung eine oder mehrere mit dem Ausbringmaterial (M) beladene Förderluftströmungen (F) zu erzeugen, zumindest einer Materialaufnahmevorrichtung (26, 26a-26d), welche mit der Materialeinspeisevorrichtung (20) verbunden und dazu eingerichtet ist, das Ausbringmaterial (M) einer mit Ausbringmaterial (M) beladenen Förderluftströmung (F) aufzunehmen und temporär als Abgabevorrat (AV) zu bevorraten; und zumindest einem Abgabedosierer (28, 28a-28d), welche mit der Materialaufnahmevorrichtung (26, 26a-26d) verbunden und dazu eingerichtet ist, das von der Materialaufnahmevorrichtung (26, 26a-26d) aus dem Abgabevorrat (AV) bereitgestellte Ausbringmaterial (M) für die Abgabe auf eine landwirtschaftliche Nutzfläche zu dosieren.

## Beschreibung

Die Erfindung betrifft ein Verteilsystem für eine landwirtschaftliche Ausbringmaschine nach dem Oberbegriff des Patentanspruchs 1, eine landwirtschaftliche Ausbringmaschine nach dem Oberbegriff des Patentanspruchs 14 und ein Verfahren zum Verteilen von Ausbringmaterial nach dem Oberbegriff des Patentanspruchs 15.

Gattungsgemäße Materialverteilsysteme weisen üblicherweise eine Materialeinspeisevorrichtung auf, welche von einem Einspeisedosierer vordosiertes Ausbringmaterial aufnehmen und temporär als Einspeisevorrat bevorraten. Auf Grundlage des Einspeisevorrats und einer in die Materialeinspeisevorrichtung eingeleiteten Luftströmung können dann mehrere mit dem Ausbringmaterial beladene Förderluftströmungen erzeugt werden. Die Materialeinspeisevorrichtung ist mit mehreren Materialaufnahmevorrichtungen verbunden, welche das Ausbringmaterial einer Förderluftströmung aufnehmen und temporär als Abgabevorrat bevorraten. Die jeweiligen Materialaufnahmevorrichtungen sind mit einem Abgabedosierer verbunden, welcher das von der Materialaufnahmevorrichtung aus dem Abgabevorrat bereitgestellte Ausbringmaterial für die Abgabe auf eine landwirtschaftliche Nutzfläche dosiert.

Bei derartigen Materialverteilsystemen besteht das Problem, dass die von dem Abgabedosierer dosierte Abgabemenge an Ausbringmaterial nicht ohne weiteres kontrollierbar ist, sodass Dosierfehler nicht zuverlässig erkannt werden können. Insofern kann es vorkommen, dass aufgrund eines Dosierfehlers des Abgabedosierers eine zu hohe oder eine zu geringe Menge an Ausbringmaterial auf die landwirtschaftliche Nutzfläche ausgebracht wird.

Die der Erfindung zugrunde liegende Aufgabe besteht also darin, den Dosierfehler derartiger Materialverteilsysteme zu reduzieren.

Die Aufgabe wird gelöst durch ein Materialverteilsystem der eingangs genannten Art, wobei das erfindungsgemäße Materialverteilsystem eine elektronische Steuerungseinrichtung aufweist, welche dazu eingerichtet ist, den Abgabedosierer in Abhängigkeit des Füllstands des Einspeisevorrats der Materialeinspeisevorrichtung und/oder der Füllstandsänderung des Einspeisevorrats der Materialeinspeisevorrichtung zu steuern.

Wenn der Füllstand des Einspeisevorrats der Materialeinspeisevorrichtung sinkt, ist die von dem Abgabedosierer dosierte Abgabemenge zu hoch. Wenn der Füllstand des Einspeisevorrats der Materialeinspeisevorrichtung steigt, ist die von dem Abgabedosierer dosierte Abgabemenge zu gering. Somit können Dosierfehler am Abgabedosierer über den Füllstand des Einspeisevorrats bzw. die Füllstandsänderung des Einspeisevorrats zuverlässig erkannt werden.

Das Materialverteilsystem kann einen Strömungserzeuger zum Erzeugen der Luftströmung aufweisen. Der Strömungserzeuger kann ein Gebläse sein. Das Ausbringmaterial kann Saatgut und/oder Dünger sein.

Die Materialaufnahmevorrichtung und der Abgabedosierer sind vorzugsweise Bestandteil einer Reiheneinheit der Ausbringmaschine. Die Steuerungseinrichtung ist vorzugsweise auch dazu eingerichtet, den Einspeisedosierer zu steuern. Die Steuerungseinrichtung steuert den Abgabedosierer und/oder den Einspeisedosierer vorzugsweise in Abhängigkeit der Fahrgeschwindigkeit. Die Materialaufnahmevorrichtung ist vorzugsweise über eine pneumatische Förderleitung mit der Materialeinspeisevorrichtung verbunden. Der Abgabedosierer ist vorzugsweise über eine Materialzuführleitung mit der Materialaufnahmevorrichtung verbunden. Der Abgabedosierer der Reiheneinheit regelt den Füllstand des Einspeisevorrats in der Materialeinspeisevorrichtung. Da der Einspeisedosierer eine sehr gute Mengentreue aufweist, wird über die Steuerung in Abhängigkeit des Füllstands des Einspeisevorrats bzw. der Füllstandsänderung des Einspeisevorrats eine gesteigerte Genauigkeit der Ausbringmenge für den Abgabedosierer bzw. die Reiheneinheit erreicht. Durch das temporäre Bevorraten des Einspeisevorrats wird durch die Materialeinspeisevorrichtung der Einspeisevorrat zur weiteren Verwendung, d.h. zur Erzeugung mehrerer mit Ausbringmaterial beladener Förderluftströmungen mit Hilfe der Luftströmung, bereitgestellt.

Äquivalente Umsetzungen der Erfindung, wie beispielsweise eine bloße Umkehr des Systems, indem der Einspeisedosierer in Abhängigkeit des Füllstands oder der Füllstände des oder der Abgabevorräte der Materialaufnahmevorrichtung oder Materialaufnahmevorrichtungen und/oder der Füllstandsänderung oder Füllstandsänderungen des oder der Abgabevorräte der Materialaufnahmevorrichtung oder Materialaufnahmevorrichtungen steuerbar ist, sollen vom Schutzbereich umfasst sein.

In einer bevorzugten Ausführungsform des erfindungsgemäßen Materialverteilsystems ist die Steuerungseinrichtung dazu eingerichtet, die von dem Abgabedosierer dosierte Abgabemenge zu verändern, wenn der Füllstand des Einspeisevorrats der Materialeinspeisevorrichtung über ein Füllstandstoleranzmaß hinaus von einem Sollfüllstand abweicht, und/oder die Füllstandsänderung des Einspeisevorrats der Materialeinspeisevorrichtung ein Toleranzmaß überschreitet. Das Füllstandstoleranzmaß kann vorgegeben oder einstellbar sein. Das Toleranzmaß für die Füllstandsänderung kann vorgegeben oder einstellbar sein. Der Sollfüllstand kann abhängig sein von dem auszubringenden Ausbringmaterial und/oder vorgangsspezifischen Ausbringparametern und/oder der Phase, insbesondere dem Anfang und/oder Ende, des Ausbringsprozesses.

In einer anderen bevorzugten Ausführungsform des erfindungsgemäßen Materialverteilsystems ist die Steuerungseinrichtung dazu eingerichtet, den Sollfüllstand zu ermitteln. Steuerungseinrichtung kann dazu eingerichtet sein, den Sollfüllstand zu berechnen. Alternativ oder zusätzlich kann die Steuerungseinrichtung dazu eingerichtet sein, den Sollfüllstand von einer Datenbank abzurufen. Beim Berechnen und/oder Abrufen des Sollfüllstands kann die Steuerungseinrichtung Ausbringparameter eines geplanten Ausbringvorgangs und/oder Eigenschaften des Ausbringmaterials berücksichtigen.

In einer Weiterbildung des erfindungsgemäßen Materialverteilsystems ist die Steuerungseinrichtung dazu eingerichtet, die von dem Abgabedosierer dosierte Abgabemenge an Ausbringmaterial zu erhöhen, wenn der Füllstand des Einspeisevorrats der Materialeinspeisevorrichtung einen Füllstandsgrenzwert überschreitet. Wenn der Einspeisevorrat der Materialeinspeisevorrichtung einen Füllstandsgrenzwert überschreitet, dosiert der Abgabedosierer eine zu geringe Menge an Ausbringmaterial, sodass die von dem Abgabedosierer dosierte Abgabemenge zu erhöhen ist. Alternativ oder zusätzlich ist die Steuerungseinrichtung dazu eingerichtet, die von dem Abgabedosierer dosierte Abgabemengen an Ausbringmaterial zu erhöhen, wenn die Füllstandsänderung des Einspeisevorrats der Materialeinspeisevorrichtung ein Füllstandsänderungsgrenzwert überschreitet. Wenn die Füllstandsänderung des Einspeisevorrats der Materialeinspeisevorrichtung einen Füllstandsänderungsgrenzwert überschreitet, dosiert der Abgabedosierer eine zu geringe Menge an Ausbringmaterial, sodass die von dem Abgabedosierer dosierte Abgabemenge an Ausbringmaterial zu erhöhen ist. Alternativ oder zusätzlich ist die Steuerungseinrichtung dazu eingerichtet, die von dem Abgabedosierer dosierte Abgabemenge an Ausbringmaterial zu verringern, wenn der Füllstand des Einspeisevorrats der Materialeinspeisevorrichtung einen Füllstandsgrenzwert unterschreitet. Wenn der Füllstand des Einspeisevorrats der Materialeinspeisevorrichtung einen Füllstandsgrenzwert unterschreitet, wird eine zu große Menge an Ausbringmaterial durch den Abgabedosierer dosiert, sodass die von dem Abgabedosierer dosierte Abgabemenge an Ausbringmaterial zu verringern ist. Alternativ oder zusätzlich ist die Steuerungseinrichtung dazu eingerichtet, die von dem Abgabedosierer dosierte Abgabemenge an Ausbringmaterial zu verringern, wenn die Füllstandsänderung des Einspeisevorrats der Materialeinspeisevorrichtung einen Füllstandsänderungsgrenzwert unterschreitet. Wenn die Füllstandsänderung des Einspeisevorrats der Materialeinspeisevorrichtung einen Füllstandsänderungsgrenzwert unterschreitet, wird eine zu hohe Menge an Ausbringmaterial von dem Abgabedosierer dosiert, sodass die von dem Abgabedosierer dosierte Abgabemenge zu verringern ist.

In einer bevorzugten Ausführungsform des erfindungsgemäßen Materialverteilsystems umfasst der Abgabedosierer ein rotierend angetriebenes Dosierelement, wobei die Steuerungseinrichtung dazu eingerichtet ist, die Drehzahl des Dosierelements in Abhängigkeit des Füllstands des Einspeisevorrats der Materialeinspeisevorrichtung und/oder der Füllstandsänderung des Einspeisevorrats der Materialeinspeisevorrichtung zu verändern. Der Abgabedosierer kann eine pneumatische Vereinzelungseinrichtung sein. Die pneumatische Vereinzelungseinrichtung kann mit Überdruck oder mit Unterdruck arbeiten. Das Dosierelement des Abgabedosierers kann eine Dosierscheibe, bspw. eine Vereinzelungsscheibe, oder eine Dosiertrommel, insbesondere eine Vereinzelungstrommel, sein. Der Abgabedosierer kann einen Motor, insbesondere einen Elektromotor, umfassen.

Es ist ferner ein erfindungsgemäßes Materialverteilsystem vorteilhaft, welches eine Füllstandserfassungseinrichtung aufweist. Die Füllstandserfassungseinrichtung ist dazu eingerichtet, den Füllstand des Einspeisevorrats der Materialeinspeisevorrichtung und/oder die Füllstandsänderung des Einspeisevorrats der Materialeinspeisevorrichtung, insbesondere sensorisch, zu erfassen. Die Füllstandserfassungseinrichtung kann dazu eingerichtet sein, den Füllstand des Einspeisevorrats der Materialeinspeisevorrichtung und/oder die Füllstandsänderung des Einspeisevorrats der Materialeinspeisevorrichtung volumetrisch und/oder gravimetrisch zu erfassen. Bei vergleichsweise leichten Saatgütern kann die volumetrische Erfassung vorteilhaft sein. Bei vergleichsweise schweren Saatgütern kann die gravimetrische Erfassung vorteilhaft sein.

Das erfindungsgemäße Materialverteilsystem wird ferner dadurch vorteilhaft weitergebildet, dass die Füllstandserfassungseinrichtung eine Wiegezelle umfasst, mittels welcher das Gewicht des Einspeisevorrats und/oder das Gewicht einer den Einspeisevorrat umfassenden Baugruppe sensorisch erfassbar ist. Die Wiegezelle ist vorzugsweise Bestandteil der Materialeinspeisevorrichtung. Alternativ oder zusätzlich kann die Füllstandserfassungseinrichtung einen Volumensensor aufweisen. Mittels des Volumensensors kann das Volumen des Einspeisevorrats sensorisch erfasst werden. Alternativ oder zusätzlich kann die Füllstandserfassungseinrichtung eine Kamera aufweisen. Über die Kamera können Bildaufnahmen des Einspeisevorrats erzeugt werden, wobei der Füllstand oder die Füllstandsänderung des Einspeisevorrats dann über eine Bildauswertung erfolgen kann. Alternativ oder zusätzlich kann die Füllstandserfassungseinrichtung einen Radarsensor aufweisen. Der Radarsensor kann bspw. von oben auf den Einspeisevorrat schallen. Mittels des Radarsensors kann der Füllstand und/oder die Füllstandsänderung des Einspeisevorrats ebenfalls sensorisch erfasst werden. Alternativ oder zusätzlich kann die Füllstandserfassungseinrichtung einen sensorischen Entfernungsmesser, bspw. einen Ultraschallsensor, umfassen. Über den sensorischen Entfernungsmesser kann der Füllstand und/oder die Füllstandsänderung des Einspeisevorrats sensorisch erfasst werden. Zur Füllstandserfassung können auch mehrere Datenpakete, insbesondere Sensordaten von mehreren Sensoren, ausgewertet werden. Die Füllstandserfassungseinrichtung kann so integriert sein, dass kein Kraft-Nebenschluss erfolgt, wodurch die Einspeisemenge präzise ausgewogen werden kann.

Es ist ferner ein erfindungsgemäßes Materialverteilsystem bevorzugt, bei welchem die Materialaufnahmevorrichtung dazu eingerichtet ist, eine Unterbrechung der mit Ausbringmaterial beladenen Förderluftströmung zu veranlassen, wenn der Abgabevorrat einen Grenzfüllstand überschreitet. Wenn der Abgabevorrat in der Materialaufnahmevorrichtung einen Grenzfüllstand überschreitet, kann eine pneumatische Verbindung zur Materialaufnahmevorrichtung unterbrochen werden, sodass die Materialförderung zur Materialaufnahmevorrichtung zum Erliegen kommt. Die Materialaufnahmevorrichtung arbeitet folglich nach dem sogenannten Nursing-Prinzip.

Es ist ferner ein erfindungsgemäßes Materialverteilsystem bevorzugt, bei welchem die Materialaufnahmevorrichtung mit mehreren Abgabedosierern verbunden ist, wobei die mehreren Abgabedosierer dazu eingerichtet sind, dass von der Materialaufnahmevorrichtung aus dem Abgabevorrat dem jeweiligen Abgabedosierer bereitgestellte Ausbringmaterial für die Abgabe auf eine landwirtschaftliche Nutzfläche zu dosieren. Die Steuerungseinrichtung ist vorzugsweise dazu eingerichtet, die mehreren Abgabedosierer in Abhängigkeit des Füllstands des Einspeisevorrats der Materialeinspeisevorrichtung und/oder der Füllstandsänderung des Einspeisevorrats der Materialeinspeisevorrichtung zu steuern. Bspw. veranlasst die Steuerungseinrichtung eine Erhöhung oder eine Verringerung der von den jeweiligen Abgabedosierern dosierten Abgabemenge an Ausbringmaterial. Das Erhöhen und Verringern der Abgabemenge kann einheitlich an mehreren oder sämtlichen Abgabedosierern oder abgabedosiererindividuell erfolgen.

In einer vorteilhaften Weiterbildung des erfindungsgemäßen Materialverteilsystems umfasst dieses zumindest zwei Abgabedosierer, wobei die Steuerungseinrichtung dazu eingerichtet ist, die zumindest zwei Abgabedosierer individuell, insbesondere unterschiedlich, zu steuern. Bspw. veranlasst die Steuerungseinrichtung eine Erhöhung oder Verringerung zumindest eines der zumindest zwei Abgabedosierer. Infolge dieser Weiterbildung ist das Materialverteilsystem dazu eingerichtet, die Querverteilung und/oder die Längsverteilung des Ausbringmaterials abgabedosiererindividuell zu steuern.

In einer weiteren bevorzugten Ausführungsform weist das erfindungsgemäße Materialverteilsystem einen Einspeisedosierer auf, welcher dazu eingerichtet ist, das Ausbringmaterial aus einem Vorratsbehälter für die Einleitung in die Materialeinspeisevorrichtung zu dosieren. Der Einspeisedosierer kann bspw. ein Dosier-Zellenrad oder eine Dosierschnecke sein. Das Materialverteilsystems kann den Vorratsbehälter umfassen.

Es ist darüber hinaus ein erfindungsgemäßes Materialverteilsystem mit einer sich entlang einer Zuführstrecke erstreckenden Materialzuführleitung zum Fördern des Ausbringmaterials von dem Einspeisedosierer zu der Materialeinspeisevorrichtung vorteilhaft. Die Zuführstrecke weist vorzugsweise eine Länge von zumindest 50 cm, insbesondere zumindest 100 cm, auf.

In einer weiteren bevorzugten Ausführungsform des erfindungsgemäßen Materialverteilsystems umfasst der Einspeisedosierer mehrere Dosiereinheiten, wobei jede Dosiereinheit dazu eingerichtet ist, Ausbringmaterial aus einem der Dosiereinheit zugeordneten Vorratsbehälter für die Einleitung in die Materialeinspeisevorrichtung zu dosieren. Die Vermischung des Ausbringmaterials kann dann bspw. in der Materialzuführleitung erfolgen. Die Steuerungseinrichtung kann dazu eingerichtet sein, einzelne, mehrere oder sämtliche Dosiereinheiten temporär zuzuschalten und/oder abzuschalten.

Das erfindungsgemäße Materialverteilsystem wird ferner dadurch vorteilhaft weitergebildet, dass die Materialeinspeisevorrichtung eine Primäreinspeiseeinheit und mehrere mit der Primäreinspeiseeinheit verbundene Sekundäreinspeiseeinheiten umfasst, wobei die Primäreinspeiseeinheit dazu eingerichtet ist, das von dem Einspeisedosierer vordosierte Ausbringmaterial aufzunehmen und temporär als Primäreinspeisevorrat zu bevorraten, um auf Grundlage des Primäreinspeisevorrats und einer in die Primäreinspeiseeinheit eingeleiteten Luftströmung eine oder mehrere mit dem Ausbringmaterial beladene Förderluftströmungen zu erzeugen. Die Sekundäreinspeiseeinheiten sind vorzugsweise jeweils dazu eingerichtet, das von der Primäreinspeiseeinheit kommende Ausbringmaterial aufzunehmen und temporär als Sekundäreinspeisevorrat zu bevorraten, um auf Grundlage des Sekundäreinspeisevorrats und einer in die jeweilige Sekundäreinspeiseeinheit eingeleiteten Luftströmung eine oder mehrere mit dem Ausbringmaterial beladene Förderluftströmungen zu erzeugen. Die eine oder die mehreren von der Sekundäreinspeiseeinheit erzeugten Förderluftströmungen werden dann jeweils einer Materialaufnahmevorrichtung zugeleitet, welche das Ausbringmaterial der zugeführten Förderluftströmung aufnimmt und temporär als Abgabevorrat bevorratet.

Die der Erfindung zugrunde liegende Aufgabe wird ferner durch eine landwirtschaftliche Ausbringmaschine der eingangs genannten Art gelöst, wobei das Materialverteilsystem der erfindungsgemäßen Ausbringmaschine nach einer der vorstehend beschriebenen Ausführungsformen ausgebildet ist. Hinsichtlich der Vorteile und Modifikationen der erfindungsgemäßen Ausbringmaschine wird somit auf die Vorteile und Modifikationen des erfindungsgemäßen Materialverteilsystems verwiesen.

Die der Erfindung zugrunde liegende Aufgabe wird ferner durch ein Verfahren der eingangs genannten Art gelöst, wobei eine Steuerungseinrichtung des Materialverteilsystems im Rahmen des erfindungsgemäßen Verfahrens den Abgabedosierer in Abhängigkeit des Füllstands des Einspeisevorrats der Materialeinspeisevorrichtung und/oder der Füllstandsänderung des Einspeisevorrats der Materialeinspeisevorrichtung steuert. Im Rahmen des Verfahrens wird vorzugsweise Ausbringmaterial mittels eines Materialverteilsystems nach einer der vorstehend beschriebenen Ausführungsformen verteilt. Hinsichtlich der Vorteile und Modifikationen des erfindungsgemäßen Verfahrens wird somit auch auf die Vorteile und Modifikationen des erfindungsgemäßen Materialverteilsystems verwiesen.

Wenn der Abgabedosierer derart kalibriert ist, dass der Füllstand des Einspeisevorrats der Materialeinspeisevorrichtung nicht über ein Füllstandstoleranzmaß hinaus von einem Sollfüllstand abweicht und/oder die Füllstandsänderung des Einspeisevorrats der Materialeinspeisevorrichtung ein Toleranzmaß nicht überschreitet, erfolgt die Dosierung durch den Abgabedosierer in beabsichtigter Weise, sodass kein Dosierfehler zu beheben ist. In diesem Fall kann der Einspeisedosierer in Abhängigkeit von erfassten Veränderungen des Ausbringmaterials, bspw. des Tausendkorngewichts, nachkalibriert werden.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes Materialverteilsystem in einer schematischen Darstellung;
- Fig. 2: ein weiteres erfindungsgemäßes Materialverteilsystem in einer schematischen Darstellung;
- Fig. 3: ein weiteres erfindungsgemäßes Materialverteilsystem in einer schematischen Darstellung;
- Fig. 4: ein weiteres erfindungsgemäßes Materialverteilsystem in einer schematischen Darstellung;
- Fig. 5: die Materialeinspeisevorrichtung eines erfindungsgemäßen Materialverteilsystems in einer schematischen Darstellung;
- Fig. 6: ein weiteres erfindungsgemäßes Materialverteilsystem in einer schematischen Darstellung;
- Fig. 7: ein weiteres erfindungsgemäßes Materialverteilsystem in einer schematischen Darstellung; und
- Fig. 8: ein weiteres erfindungsgemäßes Materialverteilsystem in einer schematischen Darstellung.

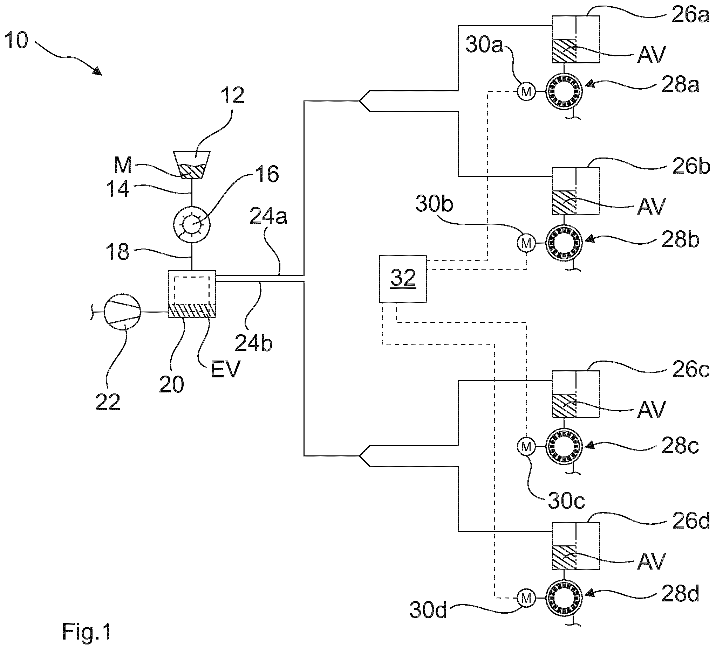

Die Fig.1 zeigt ein Materialverteilsystem 10 für eine landwirtschaftliche Ausbringmaschine. Das Materialverteilsystem 10 umfasst einen Vorratsbehälter 12 zum Bevorraten von Ausbringmaterial M. Das Ausbringmaterial M kann Saatgut oder Dünger sein. Der Vorratsbehälter 12 ist über eine Beschickungsleitung 14 mit einem Einspeisedosierer 16 verbunden. Der Einspeisedosierer 16 ist dazu eingerichtet, das Ausbringmaterial M aus dem Vorratsbehälter 12 für die Einleitung in eine Materialeinspeisevorrichtung 20 zu dosieren. Der Einspeisedosierer 16 kann bspw. ein Dosier-Zellenrad oder eine Dosierschnecke sein. Das vom Einspeisedosierer 16 vordosierte Ausbringmaterial M wird der Materialeinspeisevorrichtung 20 über die Materialzuführleitung 18 zugeführt.

Die Materialeinspeisevorrichtung 20 ist dazu eingerichtet, dass von dem Einspeisedosierer 16 vordosierte Ausbringmaterial M aufzunehmen und temporär als Einspeisevorrat EV zu bevorraten. Die Materialeinspeisevorrichtung 20 erzeugt auf Grundlage des Einspeisevorrats EV und einer in die Materialeinspeisevorrichtung 20 eingeleiteten Luftströmung mehrere mit dem Ausbringmaterial M beladene Förderluftströmungen F. Die in die Materialeinspeisevorrichtung 20 eingeleitete Luftströmung wird durch einen als Gebläse ausgebildeten Strömungserzeuger 22 erzeugt.

Die Materialeinspeisevorrichtung 20 ist über Förderleitungen 24a, 24b mit Materialaufnahmevorrichtungen 26a-26d verbunden. Die Materialaufnahmevorrichtungen 26a-26d sind dazu eingerichtet, das Ausbringmaterial M einer mit Ausbringmaterial M beladenden Förderluftströmung F aufzunehmen und temporär als Abgabevorrat AV zu bevorraten.

Die Materialaufnahmevorrichtungen 26a-26d sind jeweils mit einem Abgabedosierer 28a-28d verbunden. Die Abgabedosierer 28a-28d sind dazu eingerichtet, dass von der Materialaufnahmevorrichtung 26a-26d aus dem Abgabevorrat AV bereitgestellte Ausbringmaterial M für die Abgabe auf eine landwirtschaftliche Nutzfläche zu dosieren. Die Abgabedosierer 28a-28d umfassen jeweils ein rotierend angetriebenes Dosierelement. Die Dosierelemente der Abgabedosierer 28a-28d werden von einem Motor 30a-30d angetrieben. Die Motoren 30a-30d sind Elektromotoren.

Das Materialverteilsystem 10 umfasst ferner eine elektronische Steuerungseinrichtung 32, welche die Abgabedosierer 28a-28d in Abhängigkeit des Füllstandes des Einspeisevorrats EV der Materialeinspeisevorrichtung 20 steuert. Die Steuerungseinrichtung 32 ist dazu eingerichtet, die Drehzahl der Dosierelemente in Abhängigkeit des Füllstandes des Einspeisevorrats EV der Materialeinspeisevorrichtung 20 zu verändern. Die Abgabedosierer 28a-28d sind pneumatische Vereinzelungseinrichtungen, welche mit Überdruck arbeiten. Die rotierend angetriebenen Dosierelemente sind als Vereinzelungsscheiben ausgebildet.

Wenn der Füllstand des Einspeisevorrats EV der Materialeinspeisevorrichtung 20 sinkt, sind die von den Abgabedosierern 28a-28d dosierten Abgabemengen zu hoch. Wenn der Füllstand des Einspeisevorrats EV der Materialeinspeisevorrichtung 20 steigt, sind die von den Abgabedosierern 28a-28d dosierten Abgabemengen zu gering. Die Steuerungseinrichtung 32 ist dazu eingerichtet, die von den Abgabedosierern 28a-28d dosierte Abgabemenge zu verändern, wenn der Füllstand des Einspeisevorrats EV der Materialeinspeisevorrichtung 20 über ein Füllstandstoleranzmaß hinaus von einem Sollfüllstand SFS abweicht. Die Steuerungseinrichtung 32 ist ferner dazu eingerichtet, den Sollfüllstand SFS zu ermitteln, nämlich durch Berechnen anhand von Ausbringparametern eines geplanten Ausbringvorgangs und Eigenschaften des Ausbringmaterials M. Die Steuerungseinrichtung 32 erhöht die von den Abgabedosierern 28a-28d dosierten Abgabemengen an Ausbringmaterial M, wenn der Füllstand des Einspeisevorrats EV der Materialeinspeisevorrichtung 20 einen Füllstandsgrenzwert überschreitet. Ferner verringert die Steuerungseinrichtung die von den Abgabedosierern 28a-28d dosierten Abgabemengen an Ausbringmaterial M, wenn der Füllstand des Einspeisevorrats EV der Materialeinspeisevorrichtung einen Füllstandsgrenzwert unterschreitet.

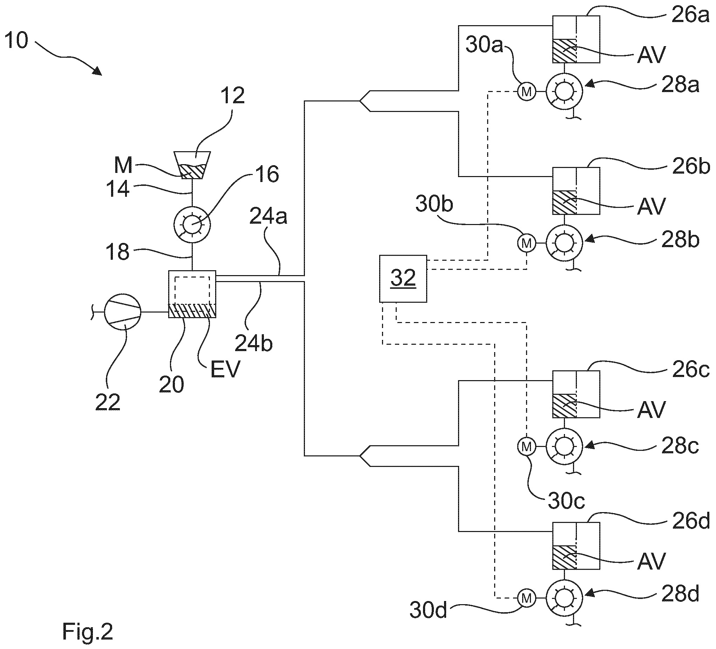

Die Fig. 2 zeigt ein Materialverteilsystem 10, bei welchem die Abgabedosierer 28a-28d volumetrisch dosieren, sodass das Ausbringmaterial M in Form eines Materialbandes in einer beabsichtigten Stärke auf die landwirtschaftliche Nutzfläche abgelegt wird. Ausgenommen diesen Unterschied entspricht der Aufbau und die Funktionsweise dieses Materialverteilsystems 10 und dessen Komponenten im Wesentlichen denen des in Fig. 1 gezeigten Materialverteilsystems 10.

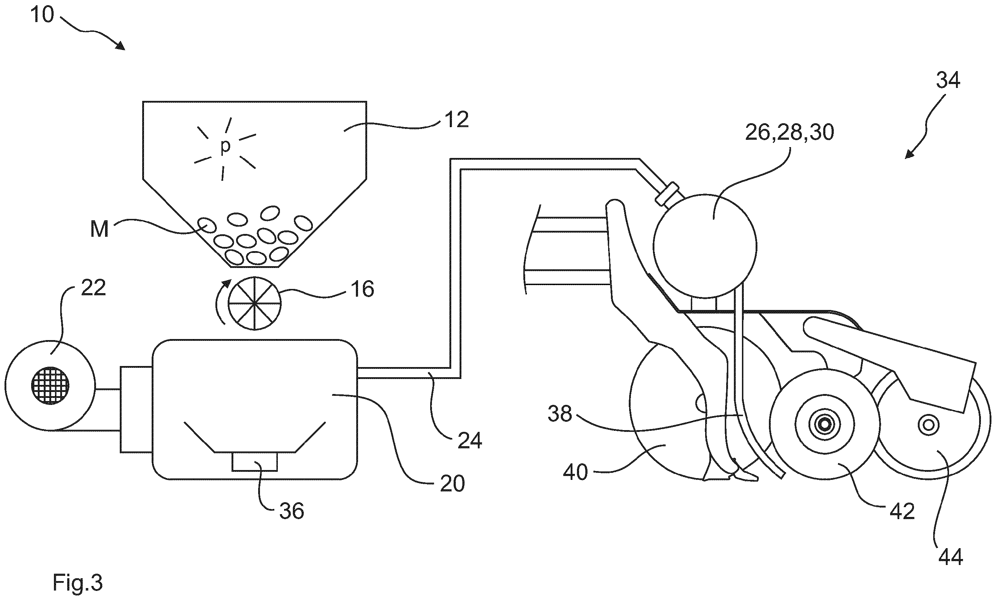

Die Fig. 3 zeigt ein Materialverteilsystem 10, bei welchem die Materialeinspeisevorrichtung 20 eine Füllstandserfassungseinrichtung 36 aufweist. Die Füllstandserfassungseinrichtung 36 erfasst den Füllstand des Einspeisevorrats EV der Materialeinspeisevorrichtung 20 sensorisch. Die Füllstandserfassungseinrichtung 36 ist dazu eingerichtet, den Füllstand des Einspeisevorrats EV der Materialeinspeisevorrichtung 20 gravimetrisch zu erfassen. Die Füllstandserfassungseinrichtung 36 umfasst eine Wiegezelle, mittels welcher das Gewicht einer den Einspeisevorrat EV umfassenden Baugruppe sensorisch erfassbar ist.

Die Materialaufnahmevorrichtung 26, der Abgabedosierer 28 und der Motor 30 sind Bestandteil einer Reiheneinheit 34. Eine landwirtschaftliche Ausbringmaschine weist üblicherweise mehrere in Querrichtung nebeneinander angeordnete Reiheneinheiten 34 auf.

Die Reiheneinheit 34 umfasst eine Ablageleitung 38, über welche das dosierte Ausbringmaterial M in die Richtung der landwirtschaftlichen Nutzfläche abgegeben wird. Die Ablageleitung 38 kann als Schussrohr ausgebildet sein. Die Reiheneinheit 34 umfasst ferner einen Furchenöffner 40 zum Öffnen einer Ablagefurche für das Ausbringmaterial M. Der Furchenöffner kann bspw. zwei Schneidscheiben umfassen und als Doppelscheibenschar ausgebildet sein. Alternativ kann der Furchenöffner 40 auch als Zinkenschar ausgebildet sein. Die Reiheneinheit 34 umfasst ferner ein Andruckelement 42, welches als Andruckrolle ausgebildet ist. Das Andruckelement 42 dient zum Fangen und Andrücken des über die Ablageleitung 38 abgegebenen Ausbringmaterials M. Hinter dem Andruckelement 42, welches als Andruckrolle ausgebildet ist, befindet sich ein Furchenschließer 44. Der Furchenschließer dient zum Schließen und Andrücken der Ablagefurche, in welche das Ausbringmaterial M abgelegt wurde.

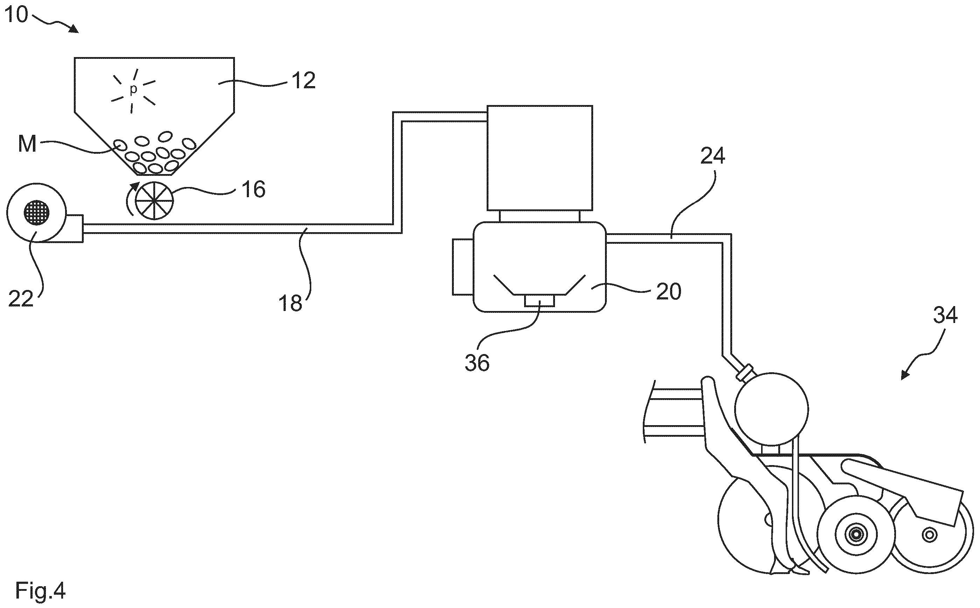

Die Fig. 4 zeigt ein Materialverteilsystem 10, bei welchem das Ausbringmaterial M über eine Materialzuführleitung 18 in die Materialeinspeisevorrichtung 20 eingeleitet und über mehrere Förderleitungen 24 aus der Materialeinspeisevorrichtung 20 ausgeleitet wird. Die Materialzuführleitung 18 erstreckt sich über eine Zuführstrecke und dient zum Fördern des Ausbringmaterials M von dem Einspeisedosierer 16 zu der Materialeinspeisevorrichtung 20. Die Zuführstrecke weist eine Länge von zumindest 100 cm auf. Entlang der Zuführstrecke kann die Homogenität einer Materialmischung erhöht werden, sodass im Falle von inhomogenen Materialmischungen auf eine separate Mischvorrichtung verzichtet werden kann.

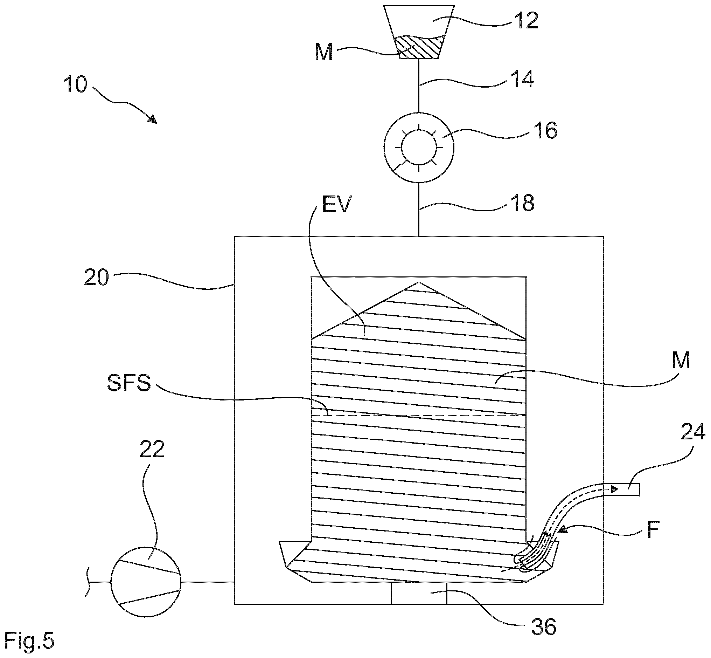

Die Fig. 5 zeigt einen Materialaufnahmebereich einer Materialeinspeisevorrichtung 20. Die Materialeinspeisevorrichtung 20 ist dazu eingerichtet, von einem Einspeisedosierer 16 vordosiertes Ausbringmaterial M aufzunehmen und temporär als Einspeisevorrat EV zu bevorraten. Auf Grundlage des Einspeisevorrats EV und einer von einem Strömungserzeuger 22 erzeugten und in die Materialeinspeisevorrichtung 20 eingeleiteten Luftströmung erzeugt die Materialeinspeisevorrichtung 20 mehrere mit dem Ausbringmaterial M beladene Förderluftströmungen F. Die erzeugten Förderluftströmungen F werden in Förderleitungen 24 eingeleitet.

Eine elektronische Steuerungseinrichtung 32 des Materialverteilsystems 10 ist dazu eingerichtet, mehrere Abgabedosierer 28 in Abhängigkeit des Füllstandes des Einspeisevorrats EV der Materialeinspeisevorrichtung 20 zu steuern. Die Steuerungseinrichtung 32 verändert die von den Abgabedosierern 28 dosierte Abgabemenge, wenn der Füllstand des Einspeisevorrats EV der Materialeinspeisevorrichtung 20 über ein Füllstandstoleranzmaß hinaus von einem Sollfüllstand SFS abweicht. Die von den Abgabedosierern 28 dosierte Abgabemenge wird von der Steuerungseinrichtung 32 erhöht, wenn der Einspeisefüllstand EV der Materialeinspeisevorrichtung über ein Füllstandstoleranzmaß hinaus den Sollfüllstand SFS überschreitet. Die von den Abgabedosierern 28 dosierte Abgabemenge an Ausbringmaterial M wird von der Steuerungseinrichtung verringert, wenn der Füllstand des Einspeisevorrats EV der Materialeinspeisevorrichtung über ein Füllstandstoleranzmaß hinaus den Sollfüllstand SFS unterschreitet.

Der Füllstand kann über eine Füllstandserfassungseinrichtung 36 erfasst werden, wobei die Füllstandserfassungseinrichtung 36 den Füllstand des Einspeisevorrats EV gravimetrisch oder volumetrisch erfassen kann.

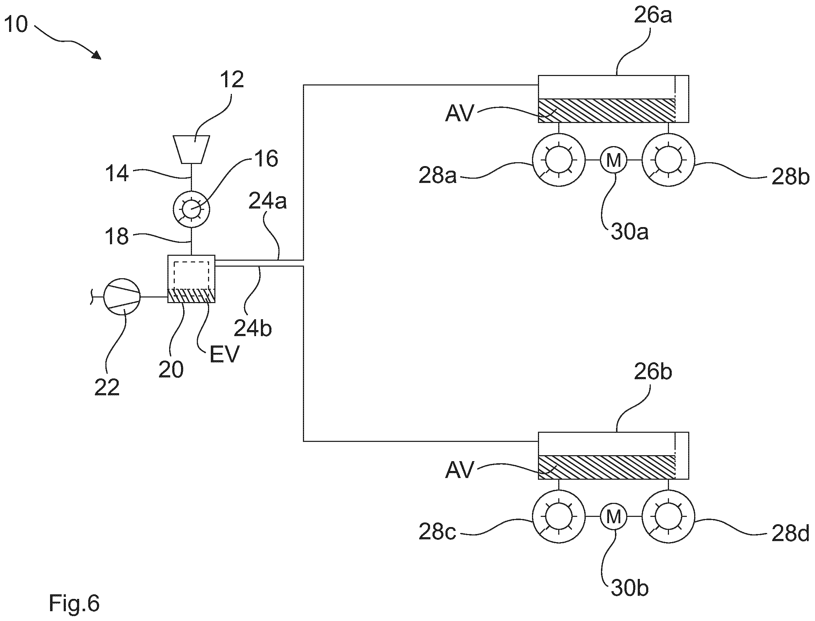

Die Fig. 6 zeigt ein Materialverteilsystem 10, bei welchem die Materialaufnahmevorrichtungen 26a, 26b jeweils mit zwei Abgabedosierern 28a-28d verbunden sind. Die Dosierelemente der Abgabedosierer 28a, 28b werden von dem Motor 30a rotatorisch angetrieben. Die Dosierelemente der Abgabedosierer 28c, 28d werden von dem Motor 30b rotatorisch angetrieben.

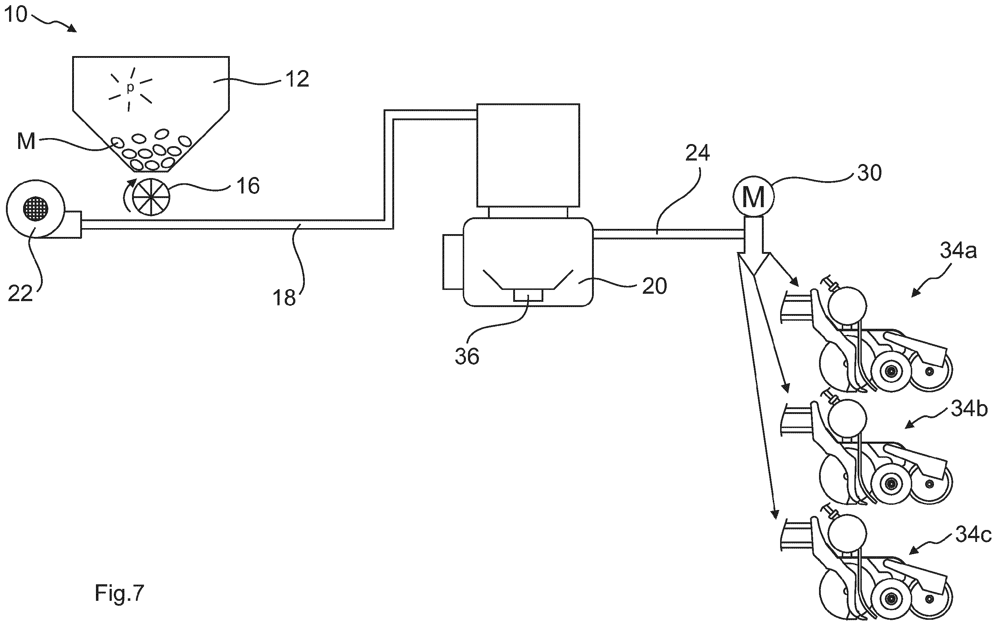

Die Fig. 7 zeigt ein Materialverteilsystem 10 einer landwirtschaftlichen Ausbringmaschine mit mehreren Reiheneinheiten 34a-34c. Die Reihen-Einheiten 34a-34c umfassen jeweils eine Materialaufnahmevorrichtung und einen Abgabedosierer. Die Dosierelemente der Abgabedosierer der Reiheneinheiten 34a-34c werden von einem gemeinsamen Motor 30 rotatorisch angetrieben.

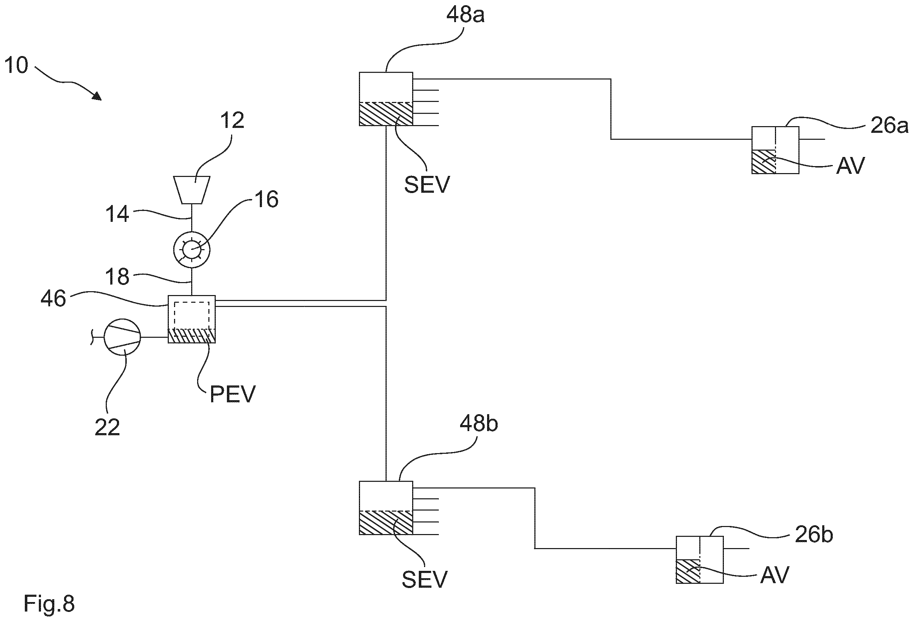

Die Fig. 8 zeigt ein Materialverteilsystem 10, bei welchem die Materialeinspeisevorrichtung eine Primäreinspeiseeinheit 46 und mehrere mit der Primäreinspeiseeinheit 46 verbundene Sekundäreinspeiseeinheiten 48a, 48b umfasst. Die Primäreinspeiseeinheit 46 ist dazu eingerichtet, das von dem Einspeisedosierer 16 vordosierte Ausbringmaterial M aufzunehmen und temporär als Primäreinspeisevorrat PEV zu bevorraten, um auf Grundlage des Primäreinspeisevorrats PEV und einer in die Primäreinspeiseeinheit 46 eingeleiteten Luftströmung mehrere mit dem Ausbringmaterial M beladene Förderluftströmungen F zu erzeugen. Die Sekundäreinspeiseeinheiten 48a, 48b sind jeweils dazu eingerichtet, das von der Primäreinspeiseeinheit 46 kommende Ausbringmaterial M aufzunehmen und temporär als Sekundäreinspeisevorrat SEV zu bevorraten, um auf Grundlage des Sekundäreinspeisevorrats SEV und einer in die jeweiligen Sekundäreinspeiseeinheiten 46a, 46b eingeleiteten Luftströmung eine oder mehrere mit dem Ausbringmaterial M beladene Förderluftströmungen F zu erzeugen. Die von den Sekundäreinspeiseeinheiten 48a, 48b erzeugten Förderluftströmungen werden dann den Materialaufnahmevorrichtungen 26a, 26b eingeleitet.

### Bezugszeichen

- 10: Materialverteilsystem
- 12: Vorratsbehälter
- 14: Beschickungsleitung
- 16: Einspeisedosierer
- 18: Materialzuführleitung
- 20: Materialeinspeisevorrichtung
- 22: Strömungserzeuger
- 24, 24a, 24b: Förderleitungen
- 26, 26a-26d: Materialaufnahmevorrichtungen
- 28, 28a-28d: Abgabedosierer
- 30, 30a-30d: Motor
- 32: Steuerungseinrichtung
- 34, 34a-34c: Reiheneinheiten
- 36: Füllstandserfassungseinrichtung
- 38: Ablageleitung
- 40: Furchenöffner
- 42: Andruckelement
- 44: Furchenschließer
- 46: Primäreinspeiseeinheit
- 48a, 48b: Sekundäreinspeiseeinheiten

- AV: Abgabevorrat
- EV: Einspeisevorrat
- F: Förderluftströmung
- M: Ausbringmaterial
- PEV: Primäreinspeisevorrat
- SEV: Sekundäreinspeisevorrat
- SFS: Sollfüllstand

## Patentansprüche

1. Materialverteilsystem (10) für eine landwirtschaftliche Ausbringmaschine, mit
- einer Materialeinspeisevorrichtung (20), welche dazu eingerichtet ist, von einem Einspeisedosierer (16) vordosiertes Ausbringmaterial (M) aufzunehmen und temporär als Einspeisevorrat (EV) zu bevorraten, um auf Grundlage des Einspeisevorrats (EV) und einer in die Materialeinspeisevorrichtung (20) eingeleiteten Luftströmung eine oder mehrere mit dem Ausbringmaterial (M) beladene Förderluftströmungen (F) zu erzeugen;
- zumindest einer Materialaufnahmevorrichtung (26, 26a, 26b), welche mit der Materialeinspeisevorrichtung (20) verbunden und dazu eingerichtet ist, das Ausbringmaterial (M) einer mit Ausbringmaterial (M) beladenen Förderluftströmung (F) aufzunehmen und temporär als Abgabevorrat (AV) zu bevorraten; und
- zumindest einem Abgabedosierer (28, 28a-28d), welcher mit der Materialaufnahmevorrichtung (26, 26a-26d) verbunden und dazu eingerichtet ist, das von der Materialaufnahmevorrichtung (26, 26a-26d) aus dem Abgabevorrat (AV) bereitgestellte Ausbringmaterial (M) für die Abgabe auf eine landwirtschaftliche Nutzfläche zu dosieren;
**gekennzeichnet durch** eine elektronische Steuerungseinrichtung (32), welche dazu eingerichtet ist, den Abgabedosierer (28, 28a-28d) in Abhängigkeit des Füllstandes des Einspeisevorrats (EV) der Materialeinspeisevorrichtung (20) und/oder der Füllstandsänderung des Einspeisevorrats (EV) der Materialeinspeisevorrichtung (20) zu steuern.

2. Materialverteilsystem (10) nach Anspruch 1,
**dadurch gekennzeichnet, dass** die Steuerungseinrichtung (32) dazu eingerichtet ist, die von dem Abgabedosierer (28, 28a-28d) dosierte Abgabemenge zu verändern, wenn der Füllstandes des Einspeisevorrats (EV) der Materialeinspeisevorrichtung (20) über ein Füllstandstoleranzmaß hinaus von einem Sollfüllstand (SFS) abweicht und/oder die Füllstandsänderung des Einspeisevorrats (EV) der Materialeinspeisevorrichtung (20) ein Toleranzmaß überschreitet.

3. Materialverteilsystem (10) nach Anspruch 2,
**dadurch gekennzeichnet, dass** die Steuerungseinrichtung (32) dazu eingerichtet ist, den Sollfüllstand (SFS) zu ermitteln.

4. Materialverteilsystem (10) nach einem der vorstehenden Ansprüche, **dadurch gekennzeichnet, dass** die Steuerungseinrichtung (32) dazu eingerichtet ist,
- die von dem Abgabedosierer (28, 28a-28d) dosierte Abgabemenge an Ausbringmaterial (M) zu erhöhen, wenn der Füllstand des Einspeisevorrats (EV) der Materialeinspeisevorrichtung (20) einen Füllstandsgrenzwert überschreitet; und/oder
- die von dem Abgabedosierer (28, 28a-28d) dosierte Abgabemenge an Ausbringmaterial (M) zu erhöhen, wenn die Füllstandsänderung des Einspeisevorrats (EV) der Materialeinspeisevorrichtung (20) einen Füllstandsänderungsgrenzwert überschreitet; und/oder
- die von dem Abgabedosierer (28, 28a-28d) dosierte Abgabemenge an Ausbringmaterial (M) zu verringern, wenn der Füllstand des Einspeisevorrats (EV) der Materialeinspeisevorrichtung (20) einen Füllstandsgrenzwert unterschreitet; und/oder
- die von dem Abgabedosierer (28, 28a-28d) dosierte Abgabemenge an Ausbringmaterial (M) zu verringern, wenn die Füllstandsänderung des Einspeisevorrats (EV) der Materialeinspeisevorrichtung (20) einen Füllstandsänderungsgrenzwert unterschreitet.

5. Materialverteilsystem (10) nach einem der vorstehenden Ansprüche,
**dadurch gekennzeichnet, dass** der Abgabedosierer (28, 28a-28d) ein rotierend angetriebenes Dosierelement umfasst, wobei die Steuerungseinrichtung (32) dazu eingerichtet ist, die Drehzahl des Dosierelements in Abhängigkeit des Füllstandes des Einspeisevorrats (EV) der Materialeinspeisevorrichtung (20)
und/oder der Füllstandsänderung des Einspeisevorrats (EV) der Materialeinspeisevorrichtung (20) zu verändern.

6. Materialverteilsystem (10) nach einem der vorstehenden Ansprüche, **gekennzeichnet durch** eine Füllstandserfassungseinrichtung (36), welche dazu eingerichtet ist, den Füllstand des Einspeisevorrats (EV) der Materialeinspeisevorrichtung (20) und/oder die Füllstandsänderung des Einspeisevorrats (EV) der Materialeinspeisevorrichtung (20), insbesondere sensorisch, zu erfassen.

7. Materialverteilsystem (10) nach Anspruch 6,
**dadurch gekennzeichnet, dass** die Füllstandserfassungseinrichtung (36) eine Wiegezelle umfasst, mittels welcher das Gewicht des Einspeisevorrats (EV) und/oder das Gewicht einer den Einspeisevorrat (EV) umfassenden Baugruppe sensorisch erfassbar ist.

8. Materialverteilsystem (10) nach einem der vorstehenden Ansprüche, **dadurch gekennzeichnet, dass** die Materialaufnahmevorrichtung (26, 26a-26d) dazu eingerichtet ist, eine Unterbrechung der mit Ausbringmaterial (M) beladenen Förderluftströmung (F) zu veranlassen, wenn der Abgabevorrat (AV) einen Grenzfüllstand überschreitet.

9. Materialverteilsystem (10) nach einem der vorstehenden Ansprüche,
**dadurch gekennzeichnet, dass** die Materialaufnahmevorrichtung (26, 26a-26d) mit mehreren Abgabedosierern (28, 28a-28d) verbunden ist, wobei die mehreren Abgabedosierer (28, 28a-28d) dazu eingerichtet sind, das von der Materialaufnahmevorrichtung (26, 26a-26d) aus dem Abgabevorrat (AV) dem jeweiligen Abgabedosierer (28, 28a-28d) bereitgestellte Ausbringmaterial (M) für die Abgabe auf eine landwirtschaftliche Nutzfläche zu dosieren;
wobei die Steuerungseinrichtung (32) vorzugsweise dazu eingerichtet ist, die mehreren Abgabedosierer (28, 28a-28d) in Abhängigkeit des Füllstandes des Einspeisevorrats (EV) der Materialeinspeisevorrichtung (20) und/oder der Füllstandsänderung des Einspeisevorrats (EV) der Materialeinspeisevorrichtung (20) zu steuern.

10. Materialverteilsystem (10) nach einem der vorstehenden Ansprüche, **gekennzeichnet durch** einen Einspeisedosierer (16), welcher dazu eingerichtet ist, das Ausbringmaterial (M) aus einem Vorratsbehälter (12) für die Einleitung in die Materialeinspeisevorrichtung (20) zu dosieren.

11. Materialverteilsystem (10) nach Anspruch 10,
**gekennzeichnet durch** eine sich entlang einer Zuführstrecke erstreckenden Materialzuführleitung (18) zum Fördern des Ausbringmaterials (M) von dem Einspeisedosierer (16) zu der Materialeinspeisevorrichtung (20).

12. Materialverteilsystem (10) nach Anspruch 10 oder 11,
**dadurch gekennzeichnet, dass** der Einspeisedosierer (16) mehrere Dosiereinheiten umfasst, wobei jede Dosiereinheit dazu eingerichtet ist, Ausbringmaterial (M) aus einem der Dosiereinheit zugeordneten Vorratsbehälter (12) für die Einleitung in die Materialeinspeisevorrichtung (20) zu dosieren.

13. Materialverteilsystem (10) nach einem der vorstehenden Ansprüche, **dadurch gekennzeichnet, dass** die Materialeinspeisevorrichtung (20) eine Primäreinspeiseeinheit (46) und mehrere mit der Primäreinspeiseeinheit (46) verbundene Sekundäreinspeiseeinheiten (48a, 48b) umfasst, wobei die Primäreinspeiseeinheit (46) dazu eingerichtet ist, das von dem Einspeisedosierer (16) vordosierte Ausbringmaterial (M) aufzunehmen und temporär als Primäreinspeisevorrat (PEV) zu bevorraten, um auf Grundlage des Primäreinspeisevorrats (PEV) und einer in die Primäreinspeiseeinheit (46) eingeleiteten Luftströmung eine oder mehrere mit dem Ausbringmaterial (M) beladene Förderluftströmungen (F) zu erzeugen; wobei die Sekundäreinspeiseeinheiten (48a, 48b) jeweils dazu eingerichtet sind, das von der Primäreinspeiseeinheit (46) kommende Ausbringmaterial (M) aufzunehmen und temporär als Sekundäreinspeisevorrat (SEV) zu bevorraten, um auf Grundlage des Sekundäreinspeisevorrats (SEV) und einer in die jeweilige Sekundäreinspeiseeinheit (48a, 48b) eingeleiteten Luftströmung eine oder mehrere mit dem Ausbringmaterial (M) beladene Förderluftströmungen (F) zu erzeugen.

14. Landwirtschaftliche Ausbringmaschine, mit
- mehreren Reiheneinheiten (34, 34a-34c) zum reihenbezogenen Abgeben von Ausbringmaterial (M) auf eine landwirtschaftliche Nutzfläche, und
- einem Materialverteilsystem (10) zum Verteilen des Ausbringmaterials (M) auf die Reiheneinheiten (34, 34a-34c);
**dadurch gekennzeichnet, dass** das Materialverteilsystem (10) nach einem der vorstehenden Ansprüche ausgebildet ist.

15. Verfahren zum Verteilen von Ausbringmaterial (M) mittels eines Materialverteilsystems (10) einer landwirtschaftliche Ausbringmaschine, insbesondere mittels eines Materialverteilsystems (10) nach einem der Ansprüche 1 bis 13, mit den Schritten:
- Aufnehmen von vordosiertem Ausbringmaterial (M) durch eine Materialeinspeisevorrichtung (20) des Materialverteilsystems (10);
- temporäres Bevorraten des aufgenommenen Ausbringmaterials (M) als Einspeisevorrat (EV) durch die Materialeinspeisevorrichtung (20);
- Erzeugen von einer oder mehreren mit dem Ausbringmaterial (M) beladenen Förderluftströmungen (F) auf Grundlage des Einspeisevorrats und einer in die Materialeinspeisevorrichtung (20) eingeleiteten Luftströmung;
- Aufnehmen von Ausbringmaterial (M) einer mit Ausbringmaterial (M) beladenen Förderluftströmung (F) durch zumindest eine Materialaufnahmevorrichtung (26, 26a-26d),
- temporäres Bevorraten des aufgenommenen Ausbringmaterials (M) als Abgabevorrat (AV) durch die Materialaufnahmevorrichtung (26, 26a-26d); und
- Dosieren des von der Materialaufnahmevorrichtung (26, 26a-26d) aus dem Abgabevorrat (AV) bereitgestellte Ausbringmaterial (M) für die Abgabe auf eine landwirtschaftliche Nutzfläche;
**dadurch gekennzeichnet, dass** eine Steuerungseinrichtung (32) des Materialverteilsystems (10) den Abgabedosierer (28, 28a-28d) in Abhängigkeit des Füllstandes des Einspeisevorrats der Materialeinspeisevorrichtung (20) und/oder der Füllstandsänderung des Einspeisevorrats der Materialeinspeisevorrichtung (20) steuert.
